# EUROPÄISCHE PATENTANMELDUNG

(11) **EP 1 710 655 A1**
(43) Veröffentlichungstag der Anmeldung: **11.10.2006**
(21) Anmeldenummer: 05007652.0
(22) Anmeldetag: 07.04.2005
(51) Int. Cl.: G06F 1/00, G06Q 10/00

(54) **Verfahren zum Bereitstellen eines Aufladesignals und Verfahren zum Auffüllen eines Benutzungsspeichers**

(71) Anmelder: Softmark AG, 82031 Grünwald (DE)
(72) Erfinder: Künlen, Mathias, 82064 Strasslach (DE); Moeller, Thomas, 82041 Deisenhofen (DE); Kaumeier, Stefan, 90762 Fürth (DE)
(74) Vertreter: Schoppe, Fritz

(57) **Zusammenfassung**

Um ein Aufladesignal zum Aufladen eines Benutzungsspeichers bereitzustellen, wird zuerst eine Kommunikationsverbindung zwischen einer Anwendereinheit (100a) und einer lizenzierenden Einheit (100b) aufgebaut. Anschließend wird von der Anwendereinheit (100a) ein Anfragesignal an die lizenzierende Einheit (100b) übertragen, das eine der Anwendereinheit (100a) zugeordnete Information und eine Information über eine gewünschte Auflademenge des Benutzungsspeichers umfasst. Hieran anschließend wird in der lizenzierenden Einheit (100b) überprüft, ob für die der Anwendereinheit (100a) zugeordneten Information in einem Speicher der lizenzierenden Einheit (100b) eine Aufladeberechtigung gespeichert ist. Ist dies der Fall, wird ein erster Zustand eines Aufladesignals ausgegeben, der von der Anwendereinheit (100a) empfangen wird und auf Grund dessen eine Aufladung des Benutzungsspeichers in der Anwendereinheit (100a) möglich ist. Ist bezüglich der der Anwendereinheit (100a) zugeordneten Information keine Aufladeberechtigung in dem Speicher der lizenzierenden Einheit gespeichert, wird ein zweiter Zustand des Aufladesignals von der lizenzierenden Einheit (100b) über die Kommunikationsverbindung an die Anwendereinheit (100a) übertragen, aufgrund dessen ein Aufladen des Benutzungsspeichers der Anwendereinheit (100a) gesperrt ist.

## Beschreibung

Die vorliegende Erfindung bezieht sich auf eine nutzenorientierte Softwarelizenzierung und insbesondere betrifft die vorliegende Erfindung ein Verfahren zum Bereitstellen eines Aufladesignals mit Hilfe dessen ein Benutzungsspeicher aufgeladen werden kann, der abhängig von einer Benutzung eines Moduls einer Software entladen wird.

Auf dem Markt für Software finden sich im zunehmenden Maße Systeme, die zu erheblichen Produktivitätssteigerungen in Unternehmen führen, welche an sich alle unterschiedlich strukturiert sind. Systeme zur Optimierung logistischer Fragestellungen, Systeme zur Optimierung des Cash-Management oder Systeme zur automatisierten Erstellung von Buchhaltungen sind hier nur einige Beispiele. Das Problem besteht bislang in der Frage, wie man den Nutzen, der durch Anwendung dieser Systeme entsteht, messbar machen und in Relation zum veranschlagten Softwarelizenzpreis setzen soll. Inzwischen gibt es zahlreiche Modelle, die die Bewertung des Nutzens konkret messbar werden lassen, indem man z.B. die Leistung eines Systems mit künstlicher Intelligenz derjenigen einer menschlichen Arbeitskraft gegenüberstellt.

Ein interessantes Beispiel findet sich bei den sogenannten Kontierungsautomaten (im Folgenden als KI-System bezeichnet), wo es darum geht, Bankauszugsumsatzbuchungen automatisch zu analysieren und zu kontieren. Bei einer zugrunde gelegten Buchungsgeschwindigkeit von ca. 40 Buchungszeilen pro Stunde durch eine routinierte Buchhaltungsfachkraft schafft das KI-System das gleiche Resultat in einem Sechstel der Zeit, bei identischer Qualität. Analoges gilt für andere Systeme, die entsprechende Optimierungen operativer Prozesse realisieren. Nachdem Anwender wie auch Unternehmen individuell sind, sowohl was die Arbeitsgeschwindigkeit, die Produktivität als auch die Organisationsstruktur betrifft, ist es mit den im folgenden beschriebenen, traditionellen Pricing-Modellen nicht oder nur unter großem Aufwand möglich, eine faire Grundlage für den durch die Software erbrachten Nutzen zu realisieren.

Bislang sind folgende Pricing-Modelle üblich:
- Pricing in Abhängigkeit von der Zahl an installierten Softwaremodulen,
- Pricing in Abhängigkeit von der Zahl der installierten Arbeitsplätze,
- Pricing durch Beschränkung auf definierte Funktionalitäten, anzulegende Mandanten, Firmen und anderes,
- Pricing nach Nutzungszeit, vor allem bei Systemen, die über das Internet betrieben werden,
- Pricing in Abhängigkeit von der Zahl der Transaktionen, z.B. Zahl der Buchungen innerhalb einer definierten Zeiteinheit.

Das Pricing in Abhängigkeit von der Zahl an installierten Softwaremodulen erlaubt nur eine grobe Anpassung an die Bedürfnisse des Anwenders und steht in keiner Weise im Verhältnis zum Nutzen, der sich individuell durch Anwendung der Software ergibt. Ähnliches gilt für das Pricing durch Beschränkung auf definierte Funktionalitäten, anzulegende Mandanten, Firmen und anderes. Auch das Pricing in Abhängigkeit von der Zahl der installierten Arbeitsplätze lässt keine kundenorientierte faire Berechnung zu, zumal keineswegs gesagt ist, dass alle Arbeitsplätze immer voll ausgelastet sind, und dass ein Unternehmen mit zehn Arbeitsplatzlizenzen den doppelt so großen Nutzen einfährt wie ein Unternehmen mit fünf Arbeitsplatzlizenzen.

Insbesondere das letzte Pricing-Modell (Pricing in Abhängigkeit von der Zahl der Transaktionen) erscheint unter allen aufgeführten Pricing-Modellen als das gerechteste, wobei hier die Schwierigkeit darin besteht, dass die Abrechnung der Nutzungen im Nachhinein erfolgt, was viel Aufwand bedeutet und immer von einem gewissen Misstrauen begleitet ist, indem der Anwender dem Anbieter unterstellt, nicht ordnungsgemäß abgerechnet zu haben. Auch stellt sich die Frage, wie die Information über den Umfang der Nutzung vom Anwender an den Anbieter gelangen soll. Hier bräuchte man eine Art von Registrierungsgerät, das, wie beim Strom, abgelesen werden müsste.

Es ist daher die Aufgabe der vorliegenden Erfindung, eine Möglichkeit zu schaffen, bei der eine Lizenzierung von einer Softwarenutzung abhängig erfolgen kann, wobei zugleich der Lizenzierung ein hohes Vertrauen sowohl des Softwareanwenders als auch des softwareanbieters entgegengebracht werden kann und wobei zugleich eine gegenüber herkömmlichen Ansätzen deutlich reduzierte Übertragung von Information notwendig ist.

Diese Aufgabe wird durch ein Verfahren gemäß Anspruch 1 sowie ein Verfahren gemäß Anspruch 6 gelöst.

Die vorliegende Erfindung schafft ein Verfahren zum Bereitstellen eines Aufladesignals zum Auffüllen eines Benutzungsspeichers einer Anwendereinheit durch eine lizenzierende Einheit, wobei in der Anwendereinheit ein zu lizenzierendes Programm abgearbeitet werden kann, wenn der Benutzungsspeicher der Anwendereinheit zumindest teilweise gefüllt ist, wobei der Benutzungsspeicher durch das Ausführen des Programms zumindest teilweise geleert wird, und wobei die lizenzierende Einheit einen Speicher umfasst, in dem ein Hinweis auf eine Aufladeberechtigung bezüglich der der Anwendereinheit zugeordneten Information abgespeichert ist, wobei das Aufladesignal lediglich zwei unterschiedliche Zustände annehmen kann und wobei das Verfahren folgende Schritte aufweist:
Aufbauen einer Kommunikationsverbindung zwischen der Anwendereinheit und der lizenzierenden Einheit;
Empfangen eines Anfragesignals, das die der Anwendereinheit zugeordnete Information und eine Information über eine gewünschte Auflademenge umfasst, um die der Benutzungsspeicher aufgeladen werden soll, wobei das Empfangen durch die lizenzierende Einheit unter Verwendung der aufgebauten Kommunikationsverbindung erfolgt;
Überprüfen, ob bezüglich der in dem Anfragesignal empfangenen, der Anwendereinheit zugeordneten Information in dem Speicher der lizenzierenden Einheit ein Hinweis auf eine Aufladeberechtigung zur Aufladung des Benutzungsspeichers der entsprechenden Anwendereinheit abgespeichert ist;
Übertragen eines ersten Zustandes des Aufladesignals unter Verwendung der Kommunikationsverbindung an die Anwendereinheit, wobei aufgrund des ersten Zustandes des Aufladesignals ein Aufladen des Benutzungsspeichers in der Anwendereinheit ermöglicht wird und wobei das Übertragen des ersten Zustandes dann erfolgt, wenn in dem Speicher der lizenzierenden Einheit bezüglich der empfangenen, der Anwendereinheit zugeordneten Information ein Hinweis auf eine Aufladeberechtigung für den Benutzungsspeicher in der entsprechenden Anwendereinheit abgespeichert ist; und
Übertragen eines zweiten Zustandes des Aufladesignals unter Verwendung der Kommunikationsverbindung an die Anwendereinheit, wobei aufgrund des zweiten Zustandes des Aufladesignals ein Aufladen des Benutzungsspeichers in der Anwendereinheit gesperrt wird, wobei das
Übertragen des zweiten Zustandes dann erfolgt, wenn in dem Speicher der lizenzierenden Einheit bezüglich der empfangenen, der Anwendereinheit zugeordneten Information kein Hinweis auf eine Aufladeberechtigung für den Benutzungsspeicher in der entsprechenden Anwendereinheit abgespeichert ist.

Ferner schafft die vorliegende Erfindung ein Verfahren zum Auffüllen eines Benutzungsspeichers einer Anwendereinheit, in der ein zu lizenzierendes Programm abgearbeitet werden kann, wenn der Benutzungsspeicher der Anwendereinheit zumindest teilweise gefüllt ist, wobei der Benutzungsspeicher durch das Ausführen des Programms zumindest teilweise geleert wird, mit folgenden Schritten:
Aufbauen einer Kommunikationsverbindung zwischen der Anwendereinheit und der lizenzierenden Einheit;
Übertragen eines Anfragesignals, das eine der Anwendereinheit zugeordnete Information und eine gewünschte Auflademenge zur Aufladung des Benutzungsspeichers der Anwendereinheit umfasst, an eine lizenzierende Einheit, wobei das Übertragen des Anfragesignals unter Verwendung der Kommunikationsverbindung erfolgt;
Empfangen eines ersten oder zweiten Zustandes des von der lizenzierenden Einheit ausgegebenen Aufladesignals, wobei das Empfangen unter Verwendung der Kommunikationsverbindung erfolgt; und
Aufladen des Benutzungsspeichers der Anwendereinheit, wenn das empfangene Aufladesignal den ersten Zustand aufweist und Unterlassen einer Aufladung des Benutzungsspeichers der Anwendereinheit, wenn das Aufladesignal den zweiten Zustand aufweist.

Der vorliegenden Erfindung liegt die Erkenntnis zugrunde, dass zunächst von einer Anwendereinheit, beispielsweise einem Computer eines Softwarenutzers, festgestellt wird, dass die Anzahl von berechtigten Nutzungen eines Moduls einer Software oder der gesamten Software nicht ausreicht, um die entsprechende Software zweckgerecht einsetzen zu können. Dies kann beispielsweise darin bestehen, dass in dem Computer des Softwareanwenders festgestellt wird, dass ein Ladungszustand eines Benutzungsspeichers wie beispielsweise eines Zählers, der die Benutzungen eines Softwaremoduls zählt, zu gering ist, um ein Modul der Software oder die Software selbst ausführen zu können. Hieran anschließend wird dann eine Anforderung an eine lizenzierende Einheit, beispielsweise einen Host-Rechner des Softwareherstellers gerichtet, in der eine der Anwendereinheit zugeordnete Information, beispielsweise eine Seriennummer der Software oder eine Seriennummer des Computers des Anwenders sowie eine gewünschte Auflademenge übermittelt wird. Dieses Übertragen der Anforderung an die lizenzierende Einheit (d.h. beispielsweise den Host-Rechner des Softwareherstellers) erfolgt dabei vorzugsweise im "Hintergrund" bei der Abarbeitung des der Software zugrunde liegenden Algorithmus, damit ein Anwender der Software keine Möglichkeit zur Manipulation einer entsprechenden Anfrage hat. In der lizenzierenden Einheit, d.h. beispielsweise auf dem Host-Rechner des Softwareherstellers, erfolgt dann ein Abgleich der von der Anwendereinheit empfangenen Anfrage, insbesondere eine Überprüfung der in der Anfrage übermittelten Information, die der Anwendereinheit zugeordnet ist. Dies entspricht einer Überprüfung, ob beispielsweise die Seriennummer der Software oder die Seriennummer des Rechners des Anwenders auch in der lizenzierenden Einheit, insbesondere in einem Speicher der lizenzierenden Einheit, gespeichert ist. Ist dies der Fall, ist der Anwender regulär beim Softwarehersteller als Anwender registriert und sollte dann die Möglichkeit erhalten, den Benutzungsspeicher wie gewünscht aufladen zu können. Es kann aber auch sein, dass ein Sperrvermerk bezüglich des Anwenders in der lizenzierenden Einheit gespeichert ist, so dass der Anwender keine Aufladung des Benutzungsspeichers durchführen darf. Abhängig von der in dem Speicher der lizenzierenden Einheit abgespeicherten Information, insbesondere einer entsprechenden Aufladeberechtigung für den jeweiligen Anwender, wird dann ein erster oder zweiter zustand eines Aufladesignals von der lizenzierenden Einheit an die Anwendereinheit bzw. den Anwender übertragen, was vorzugsweise wiederum im "Hintergrund" der Datenkommunikation zwischen der Anwendereinheit und der lizenzierenden Einheit erfolgt, um eine mögliche Manipulation dieser Kommunikation auszuschließen. Der erste Zustand des Aufladesignals kann dabei beispielsweise in einem Boolean'schen Wert TRUE bestehen, der sich beispielsweise durch einen binären Wert von 1 darstellen lässt. Dieser erste Zustand des Aufladesignals kann dann ausgeben werden, wenn in dem Speicher der lizenzierenden Einheit eine Aufladeberechtigung für den Anwender gespeichert ist, beispielsweise derart, dass der Anwender sowohl registriert und auch als zahlungskräftig gekennzeichnet ist. Der zweite Zustand des Aufladesignals kann beispielsweise ein Boolean'scher Wert von FALSE sein, der sich beispielsweise durch den binären Wert von 0 darstellen lässt, und der dann ausgegeben werden kann, wenn keine Aufladeberechtigung für den Anwender im Speicher der lizenzierenden Einheit gespeichert ist. Dies kann beispielsweise dann der Fall sein, wenn der Anwender noch nicht registriert ist oder in vorhergehenden Zahlungsvorgängen nicht zuverlässig gezahlt hat und somit von einer weiteren Nutzung des entsprechenden Moduls der Software oder der Software selbst ausgeschlossen werden soll. Abhängig von dem von der lizenzierenden Einheit übermittelten Zustand des Aufladesignals soll dann die Anwendereinheit den Benutzungsspeicher aufladen oder nicht aufladen können. Insbesondere dann, wenn das Aufladesignal den ersten Zustand hat, soll der Benutzungsspeicher aufgeladen werden, wobei bei der Übertragung des zweiten Zustands des Aufladesignals keine Aufladung des Benutzungsspeichers erfolgen darf, sondern ggf. eine Aufforderung zur Registrierung beim Softwarehersteller dem Benutzer auf einem Display angezeigt werden kann.

Die vorliegende Erfindung bietet somit den Vorteil, dass auf die konkrete Übermittlung eines Freischaltcodes verzichtet werden kann, wodurch sich eine Vereinfachung eines Rückgabevorgangs von der lizenzierenden Einheit bzw. von einem Host-Rechner des Softwareherstellers an eine Anwendereinheit, beispielsweise einen Computer des Softwarenutzers, deutlich vereinfachen lässt, da nur noch eine Boolean'sche Variable mit einer Ja/Nein-Spezifikation übertragen wird. Eine Übertragung von weiteren Informationen von der lizenzierenden Einheit an die Anwendereinheit ist dann nicht mehr erforderlich, wodurch sich der zur Aufladung des Benutzungsspeichers erforderliche Datenaustausch deutlich reduzieren lässt. Die Informationen, wie viel Benutzungseinheiten für eine weitere Benutzung benötigt werden, wurden weiterhin bereits in der Anfrage aus der Anwendereinheit erzeugt und durch beispielsweise einen Mausklick des Anwenders, beim Softwarehersteller bestellt. Dadurch ist die Information über die gewünschte Auflademenge bereits beim Anwender bzw. in der Anwendereinheit bekannt und wird schließlich nur durch die Zustände des Aufladesignals (d.h. durch die Ja/Nein-Entscheidung vom Softwarehersteller) bestätigt oder abgelehnt. Hierdurch lässt sich folglich wiederum eine Minimierung der zu übertragenden Datenmenge erreichen. Da vorzugsweise die Übertragung im "Hintergrund" bei der Benutzung der Software erfolgt, ist auch eine Verschlüsselung der übertragenen Ja/Nein-Entscheidung bzw. der übertragenen Zustände des Aufladesignals nicht mehr notwendig, da in diesem Fall eine Manipulation seitens des Anwenders nahezu ausgeschlossen werden kann. Weiterhin kann das Sicherheitsrisiko zusätzlich reduziert werden, da keine Freischaltcodes mehr im Umlauf sind, die missbraucht werden könnten, z. B. durch unbefugte Doppelnutzung, wenn zwei Anwender unter der gleichen Seriennummer angemeldet sind. Weiterhin ist auch keine lokale Speicherung von Freischaltcodes, beispielsweise auf einer Diskette oder CD oder kein Bereitstellen von präformierten Codes notwendig, wodurch sich wiederum die für das Funktionieren des erfindungsgemäßen Ansatzes erforderlichen Datenmenge reduzieren lässt.

Ein bevorzugtes Ausführungsbeispiel der vorliegenden Erfindung wird anhand der beiliegenden Figur näher erläutert. Es zeigt:

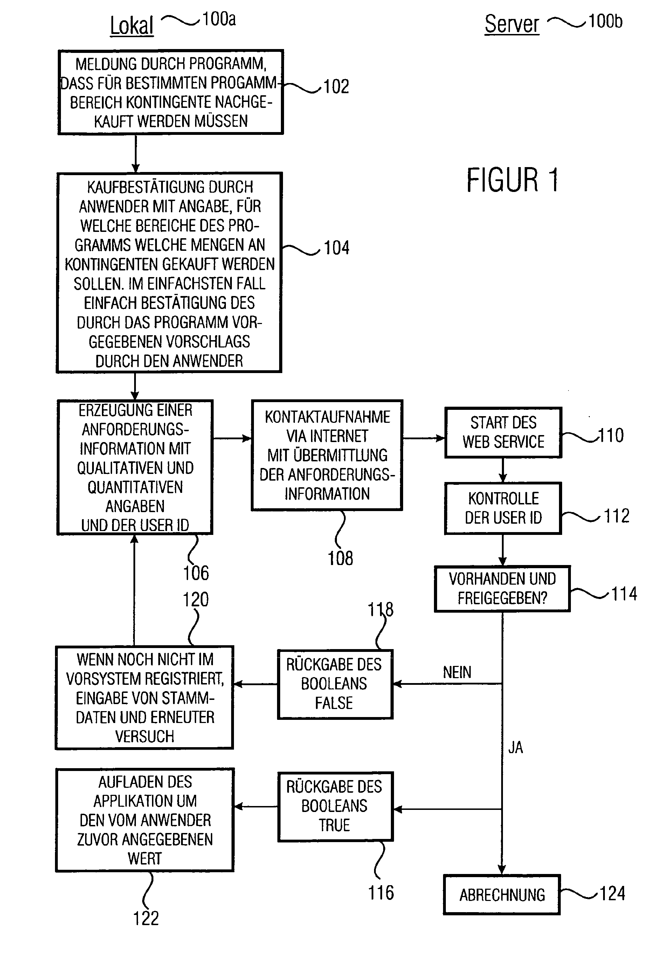

- Fig. 1: ein Ablaufdiagramm eines Ausführungsbeispiels des erfindungsgemäßen Verfahrens zum Bereitstellen eines Aufladesignals durch eine lizenzierende Einheit zum Auffüllen eines Benutzungsspeichers.

In Fig. 1 betreibt der Anwender auf einem lokalen Rechner 100a (Lokal) seine Anwendung in Form der Software. Die Anwendung erkennt beispielsweise, dass in bestimmten Bereichen des Programms eine bestimmte Menge an Kontingenten nachgekauft werden soll, um diesen Bereich des Programms weiterhin ausführen zu können. Dieser Sachverhalt wird an den Anwender durch das Programm gemeldet, derart, dass eine Meldung durch das Programm erfolgt, derart, dass für einen bestimmten Programmbereich Kontingente nachgekauft werden müssen (Schritt 102). Der Anwender entscheidet sich dann beispielsweise zum Kauf und kontaktiert aus seiner laufenden Anwendung heraus, vorzugsweise via Webservice, einen Server des Softwareherstellers 100b. Dies kann beispielsweise wie in Fig. 1 durch den dargestellten Schritt 102 erfolgen, indem eine Kaufbestätigung durch den Anwender erfolgt, der eine Angabe enthält, für welche Bereiche des Programms welche Mengen an Kontingenten gekauft werden sollen. Im einfachsten Fall erfolgt dies einfach durch Bestätigung des durch das Programm vorgeschlagenen Vorschlags durch den Anwender, es können jedoch beispielsweise auch mehr oder weniger Kontingente angefordert werden. Vorzugsweise werden bei einer derartigen Anforderung alle Informationen, welche und wie viele Kontingente benötigt werden, ebenso im Hintergrund an den Server des Softwareherstellers 100b übertragen, wie die Seriennummer bzw. die Kundennummer des Anwenders. Der in Fig. 1 dargestellte Schritt 106, der ein Erzeugen einer Anforderungsinformation mit quantitativen und qualitativen Angaben und einer User-Identifikationsnummer (USER ID) zeigt, entspricht dabei dem "Verpacken" der für die Anforderung notwendigen Informationen auf Seiten des Anwenders 100a. In einem weiteren Schritt 108 erfolgt dann die Kontaktaufnahme, die vorzugsweise via Internet erfolgt, wobei die in Schritt 106 erzeugte Anforderungsinformation an den Server 100b des Softwareherstellers übermittelt wird. Die vom Anwender zum Softwarehersteller übertragene Information muss dabei nicht verschlüsselt werden, da sie vorzugsweise im Hintergrund direkt zum Server 100b läuft (d.h. als Webservice nicht sichtbar für den Anwender ist) und in dieser Form auch keine Daten enthält, die für irgendwen von Nutzen sein könnten.

In einem weiteren Schritt 110, wie er in Fig. 1 dargestellt ist. Erfolgt ein Empfangen der Anforderungsinformation des Anwenders durch den Server 100b des Softwareherstellers, indem ein Webservice auf dem Server des Softwareherstellers gestartet wird. Der Webserviceserver analysiert dann, ob der Kunde registriert ist, was beispielsweise durch eine Kontrolle der User ID erfolgt (Schritt 112). Diese Kontrolle kann dabei derart erfolgen, dass in einem Speicher auf dem Server 100b des Softwareherstellers bereits Informationen abgelegt sind, ob ein entsprechender Anwender eine Aufladung seines Benutzungsspeichers, d.h. weitere Kontingente zum Betreiben der Software bzw. eines Moduls der Software erhalten soll. Dieser Abgleich erfolgt in Schritt 114 in Fig. 1. Darf der entsprechende Anwender weitere Kontingente beziehen, d.h. wenn die Antwort auf die Anforderung Ja lautet, dann wird einfach die Meldung "Ja" an den Rechner des Anwenders zurückgegeben, was beispielsweise durch die Ausgabe eines binären Wertes von "1" gekennzeichnet werden kann. Wenn die Antwort auf die Anforderung des Anwenders Nein lautet, dann wird die Meldung "Nein" ausgegeben, was beispielsweise durch die Ausgabe eines binären Wertes von "0" erfolgen kann. Alternativ kann auf dem Rechner des Anwenders dann eine Meldung ausgegeben werden, dass bislang noch keine Registrierung vorhanden ist und dass sich der Anwender erst registrieren lassen muss. In diesem Fall können dann die nötigen Stammdaten wie beispielsweise die Seriennummer des Softwareprogramms oder die Seriennummer des Rechners des Anwenders an den Server des Softwareherstellers übermittelt werden (oder weitere Informationen ebenfalls übermittelt werden), bis dann schließlich auch der neu angemeldete Anwender die Meldung "Ja" zurückbekommt. Oder aber der Anwender ist auf dem Server des Softwareherstellers bereits registriert, jedoch gesperrt, dann kommt genauso "Nein" zurück.

Die Meldung Ja kann dann auf dem Rechner 100a des Anwenders, d.h. der Local Machine, bewirken, dass die entsprechenden Benutzungsspeicher um die zuvor entsprechend angeforderten Menge an Kontingenten aufgeladen werden. Dies ist in Fig. 1 im Schritt 122 dargestellt. Zugleich mit dem Ausgeben der Information "Ja" kann dann eine Abrechnung an den Anwender erfolgen (Schritt 124).

Mit anderen Worten ausgedrückt, wird im erfindungsgemäßen Ansatz nur noch eine Antwort in Form von "Ja" oder "Nein" von dem Server 100b des Softwareherstellers zurückerhalten, jedoch kein Freischaltcode mehr, was sich deutlich reduzierend auf die zu übertragende Datenmenge auswirkt. Neben einer wesentlich einfacheren Informationsübertragung ist das Verfahren weiterhin auch sicherer und schneller. Es ist in diesem Ansatz auch keine zusätzliche Information mehr nötig, in einem Freischaltcode zu verschlüsseln, d.h. für welche Programmteile wie viel an Kontingenten eingekauft und vom Server 100b des Softwareherstellers freigegeben wurde, da diese Information bereits zuvor auf dem Rechner 100a des Anwenders erzeugt und durch den Anwender bestätigt wurde und bei Rückgabe der Antwort vom Server 100b des Softwareherstellers nur noch aktiviert wird.

Zusammenfassend ist anzumerken, dass der erfindungsgemäße Ansatz dem Grundprinzip nach einem Preload-Verfahren zum Auffüllen eines Benutzungsspeichers umfasst, allerdings in Abgrenzung zum Stand der Technik ohne Verwendung eines personalisierten Freischaltcodes. Die erfindungsgemäßen Verfahren sind vorzugsweise mit Webservices realisierbar, genauso gut aber auch über einen anderen Kommunikationskanal. Die Verbindung zwischen Server 100b und Local Machine 100a sollte allerdings direkt verlaufen und nicht etwa durch eine zwischengeschaltete Disk unterbrochen ist. Ein derartiger Ansatz wäre sonst nicht sicher, da die Antwort vom Server "Ja" bzw. Boolean 1 logischerweise für alle verständlich ist und nicht vor Missbrauch sicher wäre. Somit wird ein nicht-personalisiertes Aufladesignal verwendet, um den Benutzungsspeicher in der Anwendereinheit wieder aufzuladen.

## Patentansprüche

1. Verfahren zum Bereitstellen eines Aufladesignals zum Auffüllen eines Benutzungsspeichers einer Anwendereinheit (100a) durch eine lizenzierende Einheit (100b), wobei in der Anwendereinheit (100a) ein zu lizenzierendes Programm abgearbeitet werden kann, wenn der Benutzungsspeicher der Anwendereinheit (100a) zumindest teilweise gefüllt ist, wobei der Benutzungsspeicher durch das Ausführen des Programms zumindest teilweise geleert wird, und wobei die lizenzierende Einheit (100b) einen Speicher umfasst, in dem ein Hinweis auf eine Aufladeberechtigung bezüglich der der Anwendereinheit (100a) zugeordneten Information abgespeichert ist, wobei das Aufladesignal lediglich zwei unterschiedliche Zustände annehmen kann und wobei das Verfahren folgende Schritte aufweist:
Aufbauen (108) einer Kommunikationsverbindung zwischen der Anwendereinheit (100a) und der lizenzierenden Einheit (100b);
Empfangen (110) eines Anfragesignals, das die der Anwendereinheit (100a) zugeordnete Information und eine Information über eine gewünschte Auflademenge umfasst, um die der Benutzungsspeicher aufgeladen werden soll, wobei das Empfangen (110) durch die lizenzierende Einheit (100b) unter Verwendung der aufgebauten Kommunikationsverbindung erfolgt;
Überprüfen (112, 114), ob bezüglich der in dem Anfragesignal empfangenen, der Anwendereinheit (100a) zugeordneten Information in dem Speicher der lizenzierenden Einheit (100b) ein Hinweis auf eine Aufladeberechtigung zur Aufladung des Benutzungsspeichers der entsprechenden Anwendereinheit (100a) abgespeichert ist;
Übertragen (116) eines ersten Zustandes des Aufladesignals unter Verwendung der Kommunikationsverbindung an die Anwendereinheit (100a), wobei aufgrund des ersten Zustandes des Aufladesignals ein Aufladen des Benutzungsspeichers in der Anwendereinheit (110a) ermöglicht wird und wobei das Übertragen (116) des ersten Zustandes dann erfolgt, wenn in dem Speicher der lizenzierenden Einheit (100b) bezüglich der empfangenen, der Anwendereinheit (100a) zugeordneten Information ein Hinweis auf eine Aufladeberechtigung für den Benutzungsspeicher in der entsprechenden Anwendereinheit (100a) abgespeichert ist; und
Übertragen (118) eines zweiten Zustandes des Aufladesignals unter Verwendung der Kommunikationsverbindung an die Anwendereinheit (100a), wobei aufgrund des zweiten Zustandes des Aufladesignals ein Aufladen des Benutzungsspeichers in der Anwendereinheit (110a) gesperrt wird, wobei das Übertragen (118) des zweiten Zustandes dann erfolgt, wenn in dem Speicher der lizenzierenden Einheit (100b) bezüglich der empfangenen, der Anwendereinheit (100a) zugeordneten Information kein Hinweis auf eine Aufladeberechtigung für den Benutzungsspeicher in der entsprechenden Anwendereinheit (100a) abgespeichert ist.

2. Verfahren gemäß Anspruch 1, das ferner folgenden Schritt umfasst:
Abspeichern eines Hinweises auf eine Aufladeberechtigung bezüglich einer der Anwendereinheit zugeordneten Information in dem Speicher der lizenzierenden Einheit (100b), wenn das Anfragesignal ferner eine Abrechnungsinformation umfasst.

3. Verfahren gemäß einem der Ansprüche 1 oder 2, bei dem der Schritt des Aufbauens (108) der Kommunikationsverbindung derart erfolgt, dass eine Übertragung von Daten zwischen der Anwendereinheit (100a) und der lizenzierenden Einheit (100b) über die Kommunikationsverbindung gegen Eingriffe eines Nutzers der Anwendereinheit (100a) geschützt wird.

4. Verfahren gemäß einem der Ansprüche 1 bis 3, bei dem der Schritt des Aufbauens (108) einer Kommunikationsverbindung das Aufbauen einer Internetverbindung zwischen der lizenzierenden Einheit (100b) und der Anwendereinheit (100a) umfasst.

5. Verfahren gemäß einem der Ansprüche 1 bis 4, das ferner folgenden Schritt umfasst:
Abrechnen (124) der gewünschten Auflademenge, um die der Benutzungsspeicher in der entsprechender Anwendereinheit (100a) aufgeladen werden soll, wenn der erste Zustand des Aufladesignals an die Anwendereinheit (100a) übertragen wurde.

6. Verfahren zum Auffüllen eines Benutzungsspeichers einer Anwendereinheit (100a), in der ein zu lizenzierendes Programm abgearbeitet werden kann, wenn der Benutzungsspeicher der Anwendereinheit (100a) zumindest teilweise gefüllt ist, wobei der Benutzungsspeicher durch das Ausführen des Programms zumindest teilweise geleert wird, mit folgenden Schritten:
Aufbauen (108) einer Kommunikationsverbindung zwischen der Anwendereinheit (100a) und der lizenzierenden Einheit (100b);
Übertragen (108) eines Anfragesignals, das eine der Anwendereinheit (100a) zugeordnete Information und eine gewünschte Auflademenge zur Aufladung des Benutzungsspeichers der Anwendereinheit (100a) umfasst, an eine lizenzierende Einheit (100b), wobei das Übertragen des Anfragesignals unter Verwendung der Kommunikationsverbindung erfolgt;
Empfangen (116, 118) eines ersten oder zweiten Zustandes des von der lizenzierenden Einheit (100b) ausgegebenen Aufladesignals, wobei das Empfangen (116, 118) unter Verwendung der Kommunikationsverbindung erfolgt; und
Aufladen (122) des Benutzungsspeichers der Anwendereinheit (100a), wenn das empfangene Aufladesignal den ersten Zustand aufweist und Unterlassen einer Aufladung des Benutzungsspeichers der Anwendereinheit (100a), wenn das Aufladesignal den zweiten Zustand aufweist.

7. Verfahren gemäß Anspruch 6, bei dem der Schritt des Aufbauens einer Kommunikationsverbindung das Aufbauen einer Internetverbindung umfasst.

8. Verfahren gemäß einem der Ansprüche 6 oder 7, das ferner folgenden Schritt umfasst:
Übertragen (120, 106, 108) einer Abrechnungsinformation, die der Anwendereinheit zugeordnet ist und die eine Abrechnung der gewünschten Auflademenge durch die lizenzierende Einheit (100b) ermöglicht, wobei das Übertragen (120, 106, 108) nach dem Schritt des Empfangens (116, 118) erfolgt und wobei das Übertragen (120, 106, 108) dann ausgeführt wird, wenn im Schritt des Empfangens (118) der zweite Zustand des Aufladesignals empfangen wurde.

9. Computerprogramm mit Programmcode zur Durchführung eines Verfahrens gemäß einem der Ansprüche 1 bis 8, wenn das Computerprogramm auf einem Computer abläuft.
